# EUROPEAN PATENT SPECIFICATION

(11) **EP 3 584 077 B1**
(45) Date of publication and mention of the grant of the patent: **30.11.2022**
(21) Application number: 18755021.5
(22) Date of filing: 14.02.2018
(51) Int. Cl.: B32B 37/15, B32B 27/00, B32B 27/28, B65D 65/40, B65D 81/24

(54) **LAMINATED BODY, METHOD FOR MANUFACTURING SAME, PACKAGING BODY, AND PACKAGED ARTICLE**
LAMINIERTER KÖRPER, VERFAHREN ZUR HERSTELLUNG DAVON, VERPACKUNGSKÖRPER UND VERPACKTER ARTIKEL
CORPS STRATIFIÉ, SON PROCÉDÉ DE FABRICATION, CORPS D'EMBALLAGE ET ARTICLE EMBALLÉ

(30) Priority: 15.02.2017 JP 2017025731
(43) Date of publication of application: 25.12.2019
(73) Proprietor: Toppan Printing Co., Ltd., Tokyo 110-0016 (JP)
(72) Inventor: KOIDE, Youko, Tokyo 110-0016 (JP); ISHIDA, Satoru, Tokyo 110-0016 (JP); HIROSE, Ryo, Tokyo 110-0016 (JP); SUGIYAMA, Yuki, Tokyo 110-0016 (JP); SASAKI, Noe, Tokyo 110-0016 (JP)
(74) Representative: TBK
(86) International application number: PCT/JP2018/005090
(87) International publication number: WO 2018/151159

(56) References cited:
- JP-A- H08 332 701
- JP-A- 2004 243 523
- JP-A- 2005 008 264
- JP-A- 2008 265 820
- JP-A- 2012 086 856
- JP-A- 2012 086 856
- JP-A- 2013 249 069
- JP-A- 2015 168 133
- JP-A- 2015 168 133

## Description

### FIELD

The present invention relates to a laminate, a method for producing the same, a package, and a packaged article.

### BACKGROUND

In a laminate used as a packaging material, etc., a thermoplastic resin is used for its sealant layer. In particular, a polyethylene resin, a polypropylene resin, and so on are used as the thermoplastic resin, from the viewpoint of being excellent in lamination processability and heat-sealing property.

However, while these resins can achieve high adhesion strength in heat sealing, they tend to adsorb components contained in foods, medicines, etc. Therefore, a package including a sealant layer made of such a resin so as to be adjacent to a space for containing contents is liable to deteriorate or degrade the contents.

For this reason, polyacrylonitrile resin (PAN), which is a non-adsorbing material, has been used for sealant layers in laminates used for packaging of foods and medicines. However, it is difficult to procure polyacrylonitrile resin films stably, and there is a need to find substitute materials for polyacrylonitrile resins.

The invention described in Jpn. Pat. Appln. KOKAI Publication No. 2012-86876 aims to provide a packaging bag and a packaging container each having a sealant layer excellent in film-forming property, non-adsorbing property, and heat-sealing property. This document describes, in order to achieve the above-mentioned object, using, for a lid member of the packaging bag or packaging container, a laminate in which a base material layer, a linear low density polyethylene resin layer, and a cyclic polyolefin resin composition layer are stacked in this order and the cyclic polyolefin resin composition has a predetermined composition. In this invention, as the cyclic polyolefin resin composition, a resin composition is used which contains a cyclic polyolefin resin and an olefin resin whose melt flow rate at 190°C and a load of 2.16 kgf (= 21.168 N) is 5 to 40 g/600 s [g/10 min], and the proportion of the olefin resin in the resin composition is 3 to 50% by mass.

Jpn. Pat. Appln. KOKAI Publication No. 2015-168133 describes a packaging material used for a container for containing food, a medicine, etc. The packaging material includes a barrier layer having a gas barrier property between a heat seal layer and a base material layer. In this packaging material, the heat seal layer contains a layer made of a cyclic olefin copolymer. For an adhesion layer that bonds the barrier layer and the heat seal layer, adopted is a structure that contains an ethylene-methacrylic acid copolymer on the barrier layer side and linear low density polyethylene on the heat seal layer side. Thereby, the occurrence of delamination between the barrier layer and the heat seal layer is suppressed.

JP 2012 086856 A provides a paper container having both low adsorption and low migration properties for storing contents that impair the flavor when migrating.

### SUMMARY

An object of the present invention is to provide a laminate which is less likely to cause adsorption and delamination.

According to a first aspect of the present invention, there is provided a laminate comprising a base material layer, and a sealant layer provided on the base material layer, characterized in that the sealant layer comprises a first layer having one main surface constituting one outermost surface of the laminate and the other main surface facing the base material layer, and containing only a cyclic olefin resin as a resin, and a second layer interposed between the base material layer and the first layer and having a main surface in contact with the first layer, the second layer containing an ethylene-methacrylic acid copolymer, wherein a ratio of a thickness of the first layer to a thickness of the second layer is in a range of 1:3 to 6:1.

According to a second aspect of the present invention, there is provided a package comprising the laminate according to the first aspect such that the first layer is adjacent to a space for containing contents.

According to a third aspect of the present invention, there is provided a packaged article comprising the package according to the second aspect, and contents contained in the package.

According to a fourth aspect of the present invention, there is provided a method for producing the laminate according to the first aspect, comprising laminating the second layer and the first layer on the base material layer by extrusion lamination to form the sealant layer.

### BRIEF DESCRIPTION OF THE DRAWINGS

FIG. 1 is a cross-sectional view schematically showing a laminate according to an embodiment of the present invention; and
FIG. 2 is a view schematically showing a method for producing a laminate according to an embodiment of the present invention.

### DETAILED DESCRIPTION

Hereinafter, embodiments of the present invention will be described with reference to the drawings. Elements having the same or a similar function are provided with the same reference sign, and overlapping descriptions thereof are omitted.

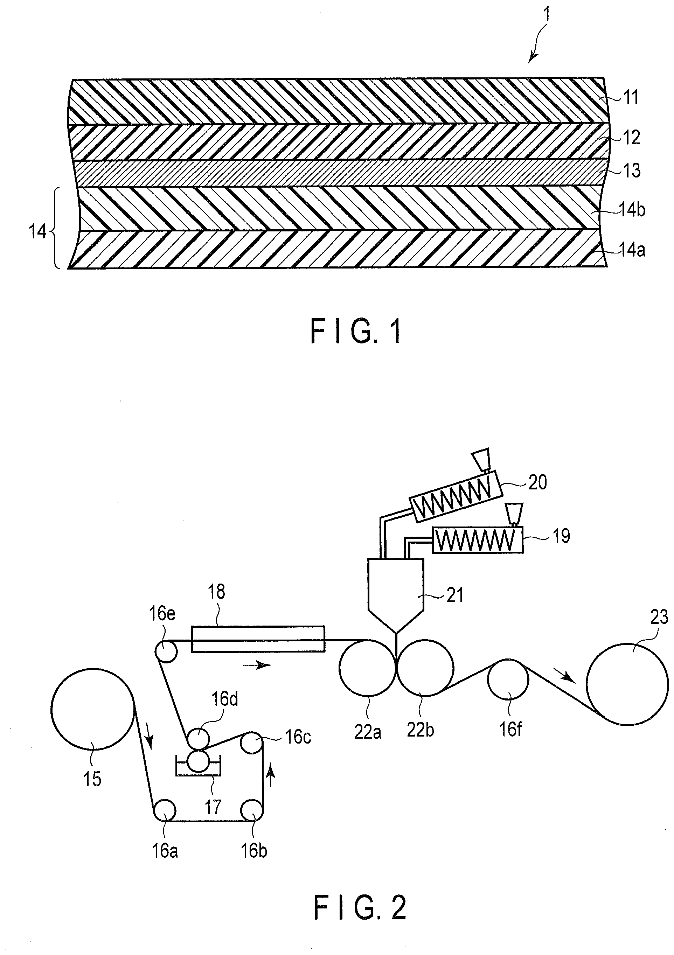

FIG. 1 is a cross-sectional view schematically showing a laminate according to an embodiment of the present invention.

The laminate 1 shown in FIG. 1 is used, for example, as a packaging material.

The laminate 1 includes a base material layer 11, an adhesive resin layer 12, a barrier layer 13, and a sealant layer 14. In the laminate 1, an adhesive layer may be provided between any adjacent layers.

The base material layer 11 is, for example, a sheet of paper, a resin film, or a combination thereof. As the resin film, a biaxially oriented polypropylene film, a biaxially oriented polyester film, a biaxially oriented nylon film, or a cellophane film can be used, for example.

A printed layer may be provided on a main surface of the base material layer 11. The printed layer may be provided on one of main surfaces of the base material layer 11 on the barrier layer 13 side, may be provided on a back surface of the barrier layer 13, or may be provided on both of them.

The adhesive resin layer 12 is interposed between the base material layer 11 and the barrier layer 13. The adhesive resin layer 12 bonds the base material layer 11 and the barrier layer 13. The adhesive resin layer 12 contains, for example, a polyolefin resin such as low density polyethylene and linear low density polyethylene.

An adhesive layer (not shown) containing an anchor coating agent may be interposed between the base material layer 11 and the adhesive resin layer 12. In this case, the adhesive layer is obtained by applying an anchor coating agent such as a urethane-based anchor coating agent, onto the main surface of the base material layer 11. The adhesive layer further strengthens the adhesion between the base material layer 11 and the adhesive resin layer 12.

The barrier layer 13 adheres to one main surface of the base material layer 11 via the adhesive resin layer 12. The barrier layer 13 suppresses the permeation of gases such as water vapor and oxygen, through the laminate 1.

The barrier layer 13 is, for example, a layer including an aluminum layer or an inorganic oxide thin film. For example, the barrier layer 13 is an aluminum foil, an aluminum vapor deposition film, or a transparent vapor deposition film.

The thickness of the aluminum foil is preferably in the range of 5 µm to 15 µm, and more preferably in the range of 5 µm to 9 µm. If the aluminum foil is too thin, handling at the time of bonding it to the base material layer 11 is difficult. If the thickness of the aluminum foil is excessively increased, it cannot be expected to improve the barrier property with an increase in thickness, resulting in high cost. Additionally, in this case, the flexibility of the laminate 1 degrades, and it becomes difficult to handle the laminate 1.

An aluminum vapor deposition film is a film in which an aluminum layer is vapor-deposited on a resin film.

The resin film is, for example, a biaxially oriented polyethylene terephthalate film, a biaxially oriented nylon film, or a biaxially oriented polypropylene film. The thickness of the resin film is not particularly limited, but is preferably in the range of 3 µm to 200 µm, and more preferably in the range of 6 µm to 30 µm.

The thickness of the aluminum vapor deposition layer is preferably in the range of 5 nm to 100 nm. If the aluminum vapor deposition layer is too thin, it may not be possible to sufficiently prevent the entry of gases such as water vapor and oxygen. A thick aluminum vapor deposition layer is not only expensive, but also tends to cause cracks in the deposited layer, which may lead to a degradation in barrier property.

The transparent vapor deposition film is a film in which an inorganic oxide thin film is formed on a resin film by means of a vacuum evaporation method or sputtering method.

As the resin film of the transparent vapor deposition film, the same films as those illustrated for the resin film of the aluminum vapor deposition film can be used.

The inorganic oxide thin film is made of, for example, an inorganic oxide such as a silicon oxide, aluminum oxide, and magnesium oxide. Most of inorganic oxide thin film layers are colorless or very thinly colored transparent layers, and thus, the transparent vapor deposition film is suitable when the laminate 1 is required to have transparency. Furthermore, since the inorganic oxide thin film transmits microwaves unlike metal layers, the laminate 1 including the transparent vapor deposition film as the barrier layer 13 can also be used for packaging materials of foodstuffs which are heated with a microwave oven.

The thickness of the inorganic oxide thin film is preferably in the range of 5 nm to 300 nm, and more preferably in the range of 10 nm to 150 nm. If the inorganic oxide thin film is too thin, a uniform film may not be obtained or the thickness may not be sufficient, and the function as the barrier layer 13 may not be sufficiently fulfilled. If the inorganic oxide thin film is too thick, the inorganic oxide thin film may be cracked when the laminate 1 is bent or applied with tension.

As the transparent vapor deposition film, for example, commercially available products such as trade name "GL FILM" and "PRIME BARRIER (registered trademark)" (all are manufactured by TOPPAN PRINTING CO., LTD.) can be used.

The aluminum vapor deposition layer and the inorganic oxide thin film may be formed on the base material layer 11. The adhesive resin layer 12 and the barrier layer 13 may be omitted when the base material layer 11 contains a resin film.

The sealant layer 14 adheres to one main surface of the barrier layer 13. The sealant layer 14 imparts heat-sealing property to the laminate 1.

The sealant layer 14 includes a first layer 14a and a second layer 14b. According to an example, the sealant layer 14 is a two-layer coextruded film having a first layer 14a and a second layer 14b.

One main surface of the first layer 14a constitutes one outermost surface of the laminate 1, and the other main surface thereof faces the base material layer 11. The first layer 14a plays a role in enhancing the non-adsorbing property of the laminate 1, in particular, the sealant layer 14, in addition to providing the laminate 1 with heat-sealing property.

The first layer 14a contains only a cyclic olefin resin as a resin. That is, the first layer 14a does not contain any resin other than the cyclic olefin resin. When the first layer 14a contains a resin other than the cyclic olefin resin, the non-adsorbing property of the sealant layer 14 degrades.

The cyclic olefin resin is preferably a ring-opening metathesis polymerization product (COP) obtained by a metathesis ring-opening polymerization of cyclic olefin, a copolymer of cyclic olefin and α-olefin (chain olefin), i.e., a cyclic olefin copolymer (COC), or a mixture thereof.

As the cyclic olefin, any cyclic hydrocarbon having an unsaturated hydrocarbon and a bicyclo ring can be used. The cyclic olefin is particularly preferably one having a bicyclo[2.2.1]hept-2-ene (norbornene) skeleton.

As a cyclic olefin resin obtained from cyclic olefin having a norbornene skeleton, for example, a ring-opening metathesis polymerization product of a norbornene monomer can be used. Examples of commercially available products of such a ring-opening metathesis polymerization product include "ZEONOR (ZEONOR (registered trademark))" manufactured by ZEON CORPORATION. As the cyclic olefin resin obtained from cyclic olefin having a norbornene skeleton, for example, a norbornene cyclic olefin copolymer can be used. Examples of commercially available products of such a cyclic olefin copolymer include "APEL (registered trademark)" manufactured by MITSUI CHEMICALS, INC., and "TOPAS (registered trademark)" manufactured by TOPAS ADVANCED POLYMERS GmbH) and sold by POLYPLASTICS CO., LTD.

Suitable cyclic olefin resins have a glass transition temperature, for example, in the range of 60°C to 100°C.

The first layer 14a may further contain an additive. The additive is, for example, one or more of a lubricant, an antioxidant, an ultraviolet light absorber, a light stabilizer, an antistatic agent, an anti-blocking agent, a flame retardant, a crosslinking agent, and a colorant. As the lubricant, for example, a higher fatty acid metal salt, aliphatic alcohol, polyglycol, triglyceride, wax, phenolic compound, or a mixture containing one or more of them, may be suitably used for the purpose of improving the processability. The wax may be a natural substance-derived wax, for example, a mineral wax such as Montan wax, or a synthetic wax such as polyethylene wax.

As the cyclic olefin resin, for example, a cyclic olefin copolymer, which is a copolymer obtained by copolymerizing ethylene and norbornene, using a metallocene catalyst, can be suitably used. Cyclic polyolefin copolymers have non-adsorbing property equivalent to that of cyclic olefin polymers and are inexpensively available. As the copolymer obtained by copolymerizing ethylene and norbornene using a metallocene catalyst, it is possible to use a copolymer containing a repeating unit represented by formula (a) and a repeating unit represented by formula (b). Example of commercially available products of such a cyclic olefin resin include "TOPAS (registered trademark)" manufactured by TOPAS ADVANCED POLYMERS GmbH and sold by POLYPLASTICS CO., LTD.

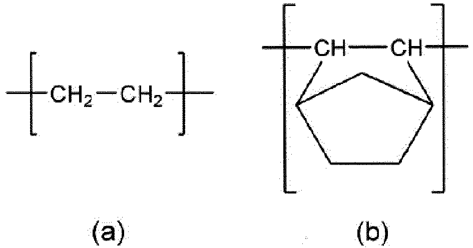

The thickness of the first layer 14a is preferably 5 µm or more. The thickness of the first layer 14a is preferably 20 µm or less. If the first layer 14a is excessively thin, the film formation of the first layer 14a may become unstable, and the effect of suppressing adsorption may be reduced. When the first layer 14a is excessively thick, the improvement in the adsorption suppressing effect accompanied by an increase in the thickness of the first layer 14a is slight.

The second layer 14b is interposed between the barrier layer 13 and the first layer 14a. According to an example, one main surface of the second layer 14b is in contact with the barrier layer 13, and the other main surface is in contact with the first layer 14a. When the adhesive resin layer 12 and the barrier layer 13 are omitted from the laminate 1, one main surface of the second layer 14b may be in contact with the base material layer 11, and the other main surface may be in contact with the first layer 14a.

The second layer 14b contains an ethylene-methacrylic acid copolymer (EMAA). The second layer 14b imparts heat-sealing property to the laminate 1. In addition, the second layer 14b exhibits high adhesion strength to both the barrier layer 13 and the first layer 14a. A structure may be adopted where the adhesive resin layer 12 and the barrier layer 13 are omitted from the laminate 1, and the second layer 14b is in direct contact with the base material layer 11. Furthermore, the ethylene-methacrylic acid copolymer (EMAA) used for the second layer 14b can directly adhere onto the barrier layer 13 when the surface of the barrier layer 13 is made of aluminum. In other words, when the surface of the barrier layer 13 is made of aluminum, the ethylene-methacrylic acid copolymer (EMAA) used for the second layer 14b can adhere onto the barrier layer 13 without providing the adhesive layer.

The ethylene-methacrylic acid copolymer is, for example, a resin polymerized by a high pressure method. An example of a commercially available ethylene-methacrylic acid copolymer is "NUCREL (registered trademark) N1108C" manufactured by DUPONT-MITSUI POLYCHEMICAL CO., LTD. According to an example, the second layer 14b contains only an ethylene-methacrylic acid copolymer as a resin. In the vicinity of the interface between the first layer 14a and the second layer 14b, there is a possibility that their components are unavoidably mixed, but the above expression "contains only" does not exclude such unavoidable mixing.

The methacrylic acid content (hereinafter, referred to as the acid content) of the ethylene-methacrylic acid copolymer is preferably in the range of 4% by mass to 11% by mass. If the acid content is excessively reduced, the adhesion strength between the second layer 14b and the barrier layer 13 lowers, and a defect such as delamination is more likely to occur after long-term storage. If the acid content is excessively increased, the adhesion strength between the second layer 14b and the first layer 14a lowers.

The ethylene-methacrylic acid copolymer preferably has a melt flow rate (MFR) 190°C and a load of 21.168 N (= 2.16 kgf) in the range of 7.0 g/600 s [g/10 min] to 15.0 g/600 s [g/10 min]. The melt flow rate (MFR) referred to herein is a measured value obtained by a method in conformity with JIS K7210:1999. The melt flow rate described above for the ethylene-methacrylic acid copolymer is, specifically, the mass of resin discharged in 10 minutes when a load of 21.168 N (= 2.16 kgf) is applied to the resin at 190°C in this method. Hereinafter, unless otherwise stated, the term "melt flow rate" means a value obtained by this method under the above-mentioned conditions.

When the melt flow rate of the ethylene-methacrylic acid copolymer is largely different from that of the cyclic olefin resin, there may be a case where the film formation becomes unstable when forming the first layer 14a and the second layer 14b by extrusion lamination.

When an ethylene-methacrylic acid copolymer having a melt flow rate falling within the above range is used, physical properties suitable for extrusion lamination can be obtained, and problems hardly occur even when high-speed film formation is conducted. Further, in this case, a homogeneous layer can be formed.

The ethylene-methacrylic acid copolymer preferably has a melting point in the range of 90°C to 110°C. A preferred cyclic olefin resin has a relatively low optimum extrusion temperature. When as the ethylene-methacrylic acid copolymer, one having a low-melting point is used, the difference between the melting point of the ethylene-methacrylic acid copolymer and the glass transition temperature of the cyclic olefin resin decreases. That is, their optimum extrusion temperatures can be made closer. Therefore, in this case, high quality layers can be formed at high speed.

The thickness of the second layer 14b is preferably 5 µm or more. The thickness of the second layer 14b is preferably 20 µm or less. When the second layer 14b is excessively thinned, the film formation of the second layer 14b becomes unstable. If the second layer 14b is excessively thickened, adsorption is liable to occur.

It is preferable that the second layer 14b and the barrier layer 13 be in direct contact with each other. That is, it is preferable that a layer containing an anchor coating agent does not exist therebetween. An anchor coating agent deteriorates when stored for a long time, and is liable to cause delamination. When the above-described structure is adopted, the occurrence of delamination due to the deterioration of the anchor coating agent does not occur. Furthermore, when the adhesive resin layer 12 and the barrier layer 13 are omitted from the laminate 1, it is preferable that the second layer 14b and the base material layer 11 be in direct contact with each other.

In the sealant layer 14, the ratio of the thickness of the first layer 14a to the thickness of the second layer 14b is in the range of 1:3 to 6:1, preferably in the range of 1:2 to 4:1. If the ratio is excessively small, adsorption cannot be sufficiently suppressed. If the ratio is excessively large, the film formation of the second layer 14b may become unstable, or in many applications, it will be overdesigned and disadvantageous in cost.

The thickness of the sealant layer 14 is preferably in the range of 10 µm to 60 µm, and more preferably in the range of 10 µm to 40 µm. If the thickness of the sealant layer 14 is excessively reduced, sufficient initial seal strength may not be achieved, or degradation in seal strength during a long-term storage may become remarkable. If the thickness of the sealant layer 14 is excessively increased, in many applications, it will be overdesigned and disadvantageous in cost.

The laminate 1 adopts the above-described configuration for the sealant layer 14. Therefore, the laminate 1 hardly causes adsorption by the sealant layer 14, delamination between the sealant layer 14 and the layer adjacent thereto, and delamination between the layers constituting the sealant layer 14.

Hereinafter, an example of a method for producing a laminate according to an embodiment of the present invention will be explained.

FIG. 2 is a view schematically showing a method for producing a laminate according to an embodiment of the present invention.

In the method shown in FIG. 2, a laminate is produced by a roll-to-roll method.

Specifically, first, an unwind roll 15 unwinds a base material layer 11. The unwound base material layer 11 is guided from the unwind roll 15 to an adhesive application unit 17 by guide rolls 16a, 16b and 16c, and passes through the adhesive application unit 17.

The adhesive application unit 17 applies an adhesive to one main surface of the base material layer 11. The adhesive is, for example, the above-mentioned anchor coat agent. When an adhesive is applied to the main surface of the base material layer 11, an adhesive layer is formed on the base material layer 11. Hereinafter, a laminate including the base material layer 11 and the adhesive layer is referred to as a first laminate. When the surface of a barrier layer 13 is made of aluminum, the adhesive application unit 17 can be omitted. That is, when the surface of the barrier layer 13 is made of aluminum, a second layer 14b can be bonded onto the barrier layer 13 without providing the adhesive layer.

The first laminate is guided by guide rolls 16d and 16e from the adhesive application unit 17 to a drying oven 18 and passes through the drying oven 18. The drying oven 18 dries the first laminate.

The dried first laminate is then conveyed between a nip roll 22a and a cooling roll 22b facing each other.

A material of a first layer 14a is supplied to a T-die 21 from a first extrusion unit 19. Furthermore, a material of a second layer 14b is supplied from a second extrusion unit 20 to the T-die 21. The T-die 21 supplies the material of the first layer 14a and the material of the second layer 14b to the gap. By this supply, a sealant layer 14 including the first layer 14a and the second layer 14b is formed on the adhesive layer.

The laminate to which the material of the first layer 14a and the material of the second layer 14b are supplied is cooled by the cooling roll 22b. A laminate 1 is obtained in this way.

The laminate 1 is then guided to a wind-up roll 23 by a guide roll 16f. The wind-up roll 23 winds the laminate 1.

Next, another example of the method for producing a laminate 1 will be described.

First, a base material layer 11 is prepared, and an anchor coating agent is applied to one of the main surfaces thereof to form an adhesive layer.

Next, the raw material of an adhesive resin layer 12 is heated and melted, and the base material layer 11 and a barrier layer 13 are sandwich laminated with the melted raw material interposed therebetween. At this time, the lamination is performed so that the adhesive layer formed on the base material layer 11 is in contact with the adhesive resin layer 12. The base material layer 11 and the barrier layer 13 may be bonded together by dry lamination.

Next, a second layer 14b and a first layer 14a are laminated on the barrier layer 13 by extrusion lamination to form a sealant layer 14. That is, the raw material of the second layer 14b and the raw material of the first layer 14a are coextruded on the barrier layer 13 to form the second layer 14b and the first layer 14a.

When the adhesive resin layer 12 and the barrier layer 13 are omitted from the laminate 1, the sealant layer 14 is formed on the base material layer 11 by extrusion lamination. Specifically, the second layer 14b and the first layer 14a are laminated on the base material layer 11 by extrusion lamination to form the second layer 14b and the first layer 14a.

A laminate 1 is obtained as described above.

According to this method, the laminate 1 can be produced at a lower cost as compared with a method of separately forming the sealant layer 14 and then laminating the same.

As described above, the laminate 1 can be used, for example, as a packaging material. In this case, a package including the packaging material includes the above-described laminate 1 so that the first layer 14a is adjacent to a space for containing contents. The package may be a bag, or may be a container including a container body having an opening and a lid closing the opening. In the latter case, the laminate 1 can be used as at least a part of the lid.

In a packaged article including the package and the contents contained therein, any contents may be employed. According to an example, the contents are medicines such as a patch. According to another example, the contents are cosmetics or food.

Since this package has high adhesion strength between the layers in the laminate 1, the performance degradation of the laminate 1 attributable to delamination, etc. hardly occurs, even if the package is stored in a sealed state for a long period of time. In addition, since the sealant layer 14 hardly causes adsorption, components contained in the contents, for example, liquid or paste-like components, are less likely to be adsorbed by the sealant layer 14. Furthermore, volatile components are also less likely to be adsorbed by the sealant layer 14. That is, this packaged article is less likely to cause deterioration of the contents.

### [EXAMPLES]

Specific examples are described below.

### <Example 1>

A laminate including a base material layer, an adhesive resin layer, a barrier layer, and a sealant layer was produced by the following method.

First, as a base material layer, a biaxially oriented polyethylene terephthalate film having a thickness of 12 µm was prepared. Specifically, FE2001 manufactured by FUTAMURA CHEMICAL CO., LTD. was prepared. In addition, an aluminum foil having a thickness of 7 µm was prepared as a barrier layer.

Next, an anchor coating agent was applied to one main surface of the base material layer, and then the base material layer and the barrier layer were sandwich-laminated so that the main surface and the barrier layer face each other with the adhesive resin layer interposed therebetween. Here, low density polyethylene was used as the material of the adhesive resin layer, and the thickness thereof was set to 15 µm.

Next, a sealant layer was formed on the barrier layer. Specifically, a second layer containing an ethylene methacrylic acid copolymer, and a first layer to be provided on the second layer and containing a cyclic polyolefin resin were formed on the barrier layer by extrusion lamination.

As a material of the first layer, TOPAS (registered trademark) "TOPAS 8007F-600" manufactured by TOPAS ADVANCED POLYMERS GmbH and sold by POLYPLASTICS CO., LTD. was used. This resin was found to have a melt flow rate at a 230°C and a load of 21.168 N (= 2.16 kgf) of 11 g/600 s [g/10 min], a density of 1.01 g/cm³, and a glass transition temperature of about 80°C.

As a material of the second layer, NUCREL (registered trademark) N1108C manufactured by DU PONT-MITSUI POLYCHEMICALS CO., LTD. was used. This resin was found to have a melt flow rate at a 190°C and a load of 21.168 N (= 2.16 kgf) of 8 g/600 s [g/10 min], a density of 0.93 g/cm³, a melting point of about 98°C, and a methacrylic acid content of 11% by mass.

The thicknesses of the first and second layers were set to 15 µm and 5 µm, respectively. That is, the ratio of the thickness of the first layer to the thickness of the second layer was set to 3:1, and the thickness of the sealant layer was set to 20 µm.

A laminate was obtained as described above.

### <Example 2>

A laminate was produced in the same manner as in Example 1 except that the thicknesses of the first layer and the second layer were set to 5 µm and 15 µm, respectively. That is, in this example, the ratio of the thickness of the first layer to the thickness of the second layer was set to 1:3.

### <Comparative Example 1>

A laminate was produced in the same manner as in

Example 1 except that the laminating order of the first layer and the second layer was reversed.

### <Example 3>

A laminate was produced in the same manner as in Example 1 except that the thicknesses of the first layer and the second layer were set to 18 µm and 3 µm, respectively. That is, in this example, the ratio of the thickness of the first layer to the thickness of the second layer was set to 6:1.

### <Comparative Example 2>

A laminate was produced in the same manner as in Example 1 except that the thicknesses of the first layer and the second layer were set to 3 µm and 18 µm, respectively. That is, in this example, the ratio of the thickness of the first layer to the thickness of the second layer was set to 1:6.

### <Example 4>

A laminated was produced in the same manner as in Example 1 except that instead of using NUCREL (registered trademark) N1108C manufactured by DU PONT-MITSUI POLYCHEMICALS CO., LTD. as the material of the second layer, NUCREL (registered trademark) N0903HC manufactured by DU PONT-MITSUI POLYCHEMICALS CO., LTD. was used. This resin was found to have a melt flow rate at 190°C and a load of 21.168 N (= 2.16 kgf) of 3 g/600 s [g/10 min], a density of 0.93 g/cm³, a melting point of 99°C, and a methacrylic acid content of 9% by mass.

### <Example 5>

A laminate was produced in the same manner as in Example 1 except that instead of using NUCREL (registered trademark) N1108C manufactured by DU PONT-MITSUI POLYCHEMICALS CO., LTD., NUCREL (registered trademark) AN4221C manufactured by DU PONT-MITSUI POLYCHEMICALS CO., LTD. was used. This resin was found to have a melt flow rate at 190°C and a load of 21.168 N (= 2.16 kgf) of 10 g/600 s [g/10 min], a density of 0.94 g/cm³, a melting point of 94°C, and a methacrylic acid content of 12% by mass.

### <Evaluation 1>

Bags having a dimension of 10 cm in length and 10 cm in width were produced from the laminates according to Examples 1 to 5 and Comparative Examples 1 and 2. Next, these bags were filled with a patch, and these bags were sealed by heat sealing. Next, packaged articles thus obtained were left to stand at room temperature for a certain period of time, and thereafter it was confirmed whether or not the active ingredients of the patch were adsorbed by the sealant layer of each of the laminates.

Furthermore, for the laminates according to Examples 1 to 5 and Comparative Examples 1 and 2, the adhesion strength between the barrier layer and the second layer and the adhesion strength between the first layer and the second layer were examined.

The results are summarized in Table 1 below.

**TABLE 1**

| | Thickness | | | Laminating order | Second layer | | | Non-adsorbing property | | Film-forming property | Adhesion strength (N/15mm) | |
|---|---|---|---|---|---|---|---|---|---|---|---|---|
| | 1st layer (µm) | 2nd layer (µm) | Ratio | | Methacrylic acid content (mass%) | Melt flow rate (g/600 s) | Melting point (°C) | 1 week later | 6 months later | | Barrier layer /2nd layer | 1st layer /2nd layer |
| Ex.1 | 15 | 5 | 3: 1 | Forward | 11 | 8 | 98 | ∘ | ∘ | ∘ | 3.8 | 1.0 |
| Ex.2 | 5 | 15 | 1: 3 | Forward | 11 | 8 | 98 | ∘ | ∘ | ∘ | 4.0 | 1.0 |
| Comp. ex. 1 | 15 | 5 | 3: 1 | Reverse | 11 | 8 | 98 | × | × | ∘ | <0.1 | 1.0 |
| Ex.3 | 18 | 3 | 6: 1 | Forward | 11 | 8 | 98 | ∘ | ∘ | △ | 3.5 | 1.0 |
| Comp. ex.2 | 3 | 18 | 1: 6 | Forward | 11 | 8 | 98 | ∘ | × | △ | 4.0 | 1.0 |
| Ex.4 | 15 | 5 | 3: 1 | Forward | 9 | 3 | 99 | ∘ | ∘ | △ | 3.5 | 1.2 |
| Ex.5 | 15 | 5 | 3: 1 | Forward | 12 | 10 | 94 | ∘ | ∘ | ∘ | 4.0 | 0. 8 |

In Table 1, the column labeled "Ratio" describes a ratio of the thickness of a first layer to the thickness of a second layer. In the column labeled as "Laminating Order", "Forward" represents that a second layer and a first layer were laminated in this order on a barrier layer, and "Reverse" represents that a first layer and a second layer were laminated in this order on a barrier layer.

In the column labeled as "Non-Adsorption Property", "o" represents that the active ingredients of the patch were not adsorbed by the sealant layer of the laminate, and "×" represents that the active ingredients of the patch were adsorbed by the sealant layer of the laminate.

In the column labeled as "Film-Forming Property", "o" indicates that a resulting melt film did not cause an edge waving phenomenon or a neck-in phenomenon when the sealant layer was formed by extrusion lamination, and "Δ" represents that a resulting melt film caused an edge waving phenomenon or a neck-in phenomenon when the sealant layer was formed by extrusion lamination.

The columns labeled as "Barrier layer/2nd layer" and "1st layer/2nd layer" describe evaluation results of the adhesion strength between the barrier layer and the second layer and the adhesion strength between the first layer and the second layer, respectively.

As shown in Table 1, in the packaged articles whose bags were manufactured from the laminates according to Examples 1 to 5, the active ingredients of the contents were not adsorbed by the sealant layer even after long-term storage. The laminates according to Examples 1 to 5 were excellent in both the adhesion strength between the barrier layer and the second layer and the adhesion strength between the first layer and the second layer, and did not cause delamination. In particular, the laminates according to Examples 1 to 4 were extremely excellent in both the adhesion strength between the barrier layer and the second layer and the adhesion strength between the first layer and the second layer.

### <Comparative Example 3>

A laminate was produced in the same manner as in Example 1 except that a mixture of 70 parts by mass of a cyclic polyolefin resin and 30 parts by mass of linear low density polyethylene was used as the material of a first layer. Here, the same resin as that used in Example 1 was used as the cyclic polyolefin resin.

### <Evaluation 2>

Bags were produced from the laminates according to Example 1 and Comparative Example 3. Next, these bags were filled with a patch, and these bags were sealed by heat sealing. Next, packaged articles thus obtained were left to stand at room temperature for 3 days, and thereafter, the amount of adsorption by the sealant layer was examined for the active ingredients contained in the patch. The results are summarized in Table 2 below.

**TABLE 2**

| | Composition of first layer (parts by mass) | | Amount of adsorption (mg/m²) | | |
|---|---|---|---|---|---|
| | Cyclic polyolefin resin | Linear low density polyethylene | Methyl salicylate | 1-menthol | DL-camphor |
| Ex.1 | 100 | 0 | 48.0 | 3.6 | 0.7 |
| Comp. ex.3 | 70 | 30 | 124.7 | 33.7 | 7.6 |

As shown in Table 2, when linear low density polyethykene was added to the first layer, for all of methyl salicylate, 1-menthol, and DL-camphor, the amount of absorption by the sealant layer was significantly increased.

## Claims

1. A laminate (1) comprising:
a base material layer (11); and
a sealant layer (14) provided on the base material layer (11),
**characterized in that**
the sealant layer (14) comprises
a first layer (14a) having one main surface constituting one outermost surface of the laminate (1) and the other main surface facing the base material layer (11), and containing only a cyclic olefin resin as a resin, and
a second layer (14b) interposed between the base material layer (11) and the first layer (14a) and having a main surface in contact with the first layer (14a), the second layer (14b) containing an ethylene-methacrylic acid copolymer,
wherein a ratio of a thickness of the first layer (14a) to a thickness of the second layer (14b) is in a range of 1:3 to 6:1.

2. The laminate (1) according to claim 1, wherein the ethylene-methacrylic acid copolymer has an acid content in a range of 4% by mass to 11% by mass.

3. The laminate (1) according to claim 1 or 2, wherein the ethylene-methacrylic acid copolymer has a melt flow rate at 190°C and a load of 21.168 N obtained by a method in conformity with JIS K7210:1999 in the range of 7.0 g/600 s to 15.0 g/600 s.

4. The laminate (1) according to any one of claims 1 to 3, wherein the ethylene-methacrylic acid copolymer has a melting point of 100°C or lower.

5. The laminate (1) according to any one of claims 1 to 4, wherein a thickness of the sealant layer (14) is in a range of 10 µm to 60 µm, and the thickness of each of the first and second layers (14a, 14b) is 5 µm or more.

6. The laminate (1) according to any one of claims 1 to 5, further comprising a barrier layer (13) interposed between the base material layer (11) and the sealant layer (14), wherein the sealant layer (14) is in contact with the barrier layer (13).

7. The laminate (1) according to claim 6, wherein the barrier layer (13) is selected from an aluminum foil, an aluminum vapor deposition film, and a transparent vapor deposition film.

8. The laminate (1) according to claim 6 or 7, wherein the barrier layer (13) includes an aluminum layer.

9. A package comprising the laminate (1) according to any one of claims 1 to 8 such that the first layer (14a) is adjacent to a space for containing contents.

10. A packaged article comprising:
the package according to claim 9; and
contents contained in the package.

11. A method for producing the laminate (1) according to any one of claims 1 to 8, comprising:
laminating the second layer (14b) and the first layer (14a) on the base material layer (11) by extrusion lamination to form the sealant layer (14).

## Patentansprüche

1. Laminat (1), umfassend:
eine Grundmaterialschicht (11); und
eine Dichtungsschicht (14), die auf der Grundmaterialschicht (11) vorgesehen ist,
**dadurch gekennzeichnet, dass**
die Dichtungsschicht (14) umfasst
eine erste Schicht (14a), die eine Hauptoberfläche aufweist, die eine äußerste Oberfläche des Laminats (1) bildet, und deren andere Hauptoberfläche der Grundmaterialschicht (11) zugewandt ist, und die nur ein Cyclo-Olefinharz als Harz enthält, und
eine zweite Schicht (14b), die zwischen der Grundmaterialschicht (11) und der ersten Schicht (14a) angeordnet ist und eine Hauptoberfläche in Kontakt mit der ersten Schicht (14a) aufweist, wobei die zweite Schicht (14b) ein Ethylen-Methacrylsäure-Copolymer enthält,
wobei das Verhältnis der Dicke der ersten Schicht (14a) zur Dicke der zweiten Schicht (14b) in einem Bereich von 1:3 bis 6:1 liegt.

2. Laminat (1) nach Anspruch 1, wobei das Ethylen-Methacrylsäure-Copolymer einen Säuregehalt in einem Bereich von 4 Massen-% bis 11 Massen-% aufweist.

3. Laminat (1) nach Anspruch 1 oder 2, wobei das Ethylen-Methacrylsäure-Copolymer eine Schmelzflussrate bei 190°C und einer Belastung von 21,168 N, erhalten durch ein Verfahren in Übereinstimmung mit JIS K7210:1999, im Bereich von 7,0 g/600 s bis 15,0 g/600 s aufweist.

4. Laminat (1) nach einem der Ansprüche 1 bis 3, wobei das Ethylen-Methacrylsäure-Copolymer einen Schmelzpunkt von 100°C oder niedriger hat.

5. Laminat (1) nach einem der Ansprüche 1 bis 4, wobei die Dicke der Dichtungsschicht (14) in einem Bereich von 10 µm bis 60 µm liegt und die Dicke der ersten und zweiten Schicht (14a, 14b) jeweils 5 µm oder mehr beträgt.

6. Laminat (1) nach einem der Ansprüche 1 bis 5, ferner umfassend eine Sperrschicht (13), die zwischen der Grundmaterialschicht (11) und der Dichtungsschicht (14) angeordnet ist, wobei die Dichtungsschicht (14) in Kontakt mit der Sperrschicht (13) steht.

7. Laminat (1) nach Anspruch 6, wobei die Sperrschicht (13) ausgewählt ist aus einer Aluminiumfolie, einem Aluminiumaufdampfungsüberzug und einem transparenten Aufdampfungsüberzug.

8. Laminat (1) nach Anspruch 6 oder 7, wobei die Sperrschicht (13) eine Aluminiumschicht enthält.

9. Verpackung, die das Laminat (1) nach einem der Ansprüche 1 bis 8 umfasst, so dass die erste Schicht (14a) an einen Raum zur Aufnahme von Inhalt angrenzt.

10. Verpackter Gegenstand, umfassend:
die Verpackung nach Anspruch 9; und
den in der Verpackung enthaltenen Inhalt.

11. Verfahren zur Herstellung des Laminats (1) nach einem der Ansprüche 1 bis 8, umfassend:
Laminieren der zweiten Schicht (14b) und der ersten Schicht (14a) auf die Grundmaterialschicht (11) durch Extrusionslaminierung, um die Dichtungsschicht (14) zu bilden.

## Revendications

1. Stratifié (1) comprenant :
une couche de matériau de base (11) ; et
une couche d'étanchéité (14) placée sur la couche de matériau de base (11),
**caractérisé en ce que**
la couche d'étanchéité (14) comprend
une première couche (14a) possédant une surface principale constituant une surface la plus à l'extérieur du stratifié (1) et l'autre surface principale faisant face à la couche de matériau de base (11), et contenant seulement une résine d'oléfine cyclique en tant qu'une résine, et
une deuxième couche (14b) interposée entre la couche de matériau de base (11) et la première couche (14a) et possédant une surface principale en contact avec la première couche (14a), la deuxième couche (14b) contenant un copolymère d'éthylène-acide méthacrylique,
un rapport d'une épaisseur de la première couche (14a) sur une épaisseur de la deuxième couche (14b) étant dans une plage de 1 : 3 à 6 : 1.

2. Stratifié (1) selon la revendication 1, le copolymère d'éthylène-acide méthacrylique possédant une teneur en acide dans une plage de 4 % en masse à 11 % en masse.

3. Stratifié (1) selon la revendication 1 ou 2, le copolymère d'éthylène-acide méthacrylique possédant un indice de fluidité à chaud à 190 °C et une charge de 21,168 N obtenu par un procédé en conformité avec la norme JIS K7210:1999 dans la plage de 7,0 g/600 s à 15,0 g/600 s.

4. Stratifié (1) selon l'une quelconque des revendications 1 à 3, le copolymère d'éthylène-acide méthacrylique possédant un point de fusion de 100 °C ou moins.

5. Stratifié (1) selon l'une quelconque des revendications 1 à 4, une épaisseur de la couche d'étanchéité (14) étant dans une plage de 10 µm à 60 µm, et l'épaisseur de chacune parmi la première et la deuxième couche (14a, 14b) étant de 5 µm ou plus.

6. Stratifié (1) selon l'une quelconque des revendications 1 à 5, comprenant en outre une couche barrière (13) interposée entre la couche de matériau de base (11) et la couche d'étanchéité (14), la couche d'étanchéité (14) étant en contact avec la couche barrière (13).

7. Stratifié (1) selon la revendication 6, la couche barrière (13) étant choisie parmi une feuille d'aluminium, un film d'aluminium déposé en phase vapeur et un film transparent déposé en phase vapeur.

8. Stratifié (1) selon la revendication 6 ou 7, la couche barrière (13) comprenant une couche d'aluminium.

9. Emballage comprenant le stratifié (1) selon l'une quelconque des revendications 1 à 8 de sorte que la première couche (14a) soit adjacente à un espace pour contenir des contenus.

10. Article emballé comprenant :
l'emballage selon la revendication 9 ; et
des contenus contenus dans l'emballage.

11. Procédé pour la production du stratifié (1) selon l'une quelconque des revendications 1 à 8, comprenant :
la stratification de la deuxième couche (14b) et de la première couche (14a) sur la couche de matériau de base (11) par stratification par extrusion pour former la couche d'étanchéité (14).
